# EUROPÄISCHE PATENTSCHRIFT

(11) **EP 2 842 779 B1**
(45) Veröffentlichungstag und Bekanntmachung des Hinweises auf die Patenterteilung: **04.07.2018**
(21) Anmeldenummer: 14180966.5
(22) Anmeldetag: 14.08.2014
(51) Int. Cl.: B60J 7/12, F16B 19/04

(54) **Lageranordnung**
Bearing assembly
Système de palier

(30) Priorität: 26.08.2013 DE 102013216919
(43) Veröffentlichungstag der Anmeldung: 04.03.2015
(73) Patentinhaber: Magna Car Top Systems GmbH, 74321 Bietigheim-Bissingen (DE)
(72) Erfinder: Kailasapathi, Shankar, 70199 Stuttgart (DE)
(74) Vertreter: Rausch, Gabriele

(56) Entgegenhaltungen:
- EP-A2- 1 080 964
- EP-A2- 2 141 366
- DE-A1- 10 134 439
- DE-B3-102006 032 700
- DE-U1-202012 009 279
- DE-U1-202013 003 967
- GB-A- 2 205 133

## Beschreibung

### Gebiet der Erfindung

Die vorliegende Erfindung betrifft eine Lageranordnung vorzugsweise für einen Verdeckmechanismus eines Cabriolets, umfassend zumindest ein erstes Bauteil mit einer Lageröffnung, und einem Verbindungselement, wobei das Verbindungselement über die Lageröffnung des ersten Bauteils mit diesem verbindbar ist, wobei das Verbindungselement zumindest abschnittsweise mit einem zweiten, nicht metallischen Werkstoff umspritzt ist.

### Stand der Technik

Die EP1745219A1 beschreibt eine Buchse zur gelenkigen Verbindung wenigstens zweier Elemente, insbesondere eines Verdeckmechanismus eines Cabrioletfahrzeuges.

Solche Buchsen werden zwischen zwei gegeneinander drehbaren Elementen verwendet, wobei die Buchse aus Metall oder Kunststoff hergestellt sein kann.

Aus der US4949450A ist eine isolierte Blindniet Befestigungsanordnung in einer Wandöffnung, umfassend ein Blindniet mit einem rohrförmigen Nietelement und einer Betätigungsstange, die innerhalb des rohrförmigen Elements angeordnet ist und zum axialen Entfernen daraus angepasst; eine Isolationshülse aus elektrisch nicht leitendem Werkstoff hergestellt und über dem rohrförmigen Nietelement angeordnet; die Blindniet Betätigungsstange ist aus dem rohrförmigen Nietelement zum Dehnen des rohrförmigen Nietelement und der Isolationshülse in eine feste zusammenpassende Beziehung innerhalb der Wandöffnung entfernbar. Die Isolationshülse, welche vorzugsweise aus einem elastischen Kunststoff hergestellt ist, ist auch für eine Schaffung einer im Wesentlichen schwingungsgedämpfte Befestigung innerhalb der Wandöffnung wirksam.

In der DE10118674B4 wird ein Lagerzapfen, für Radaufhängungen von Kraftfahrzeugen, zur Erzielung einer definierten Außenkontur mit einer Kunststoffummantelung versehen, wobei zur Erzielung der definierten Außenkontur der Lagerzapfen in einer Spritzgussform mit Kunststoff umspritzt ist.

Die DE 101 34 439 A1 beschreibt ein schwenkbares Gestänge für ein öffnungsfähiges Fahrzeugdach, insbesondere ein Cabrio, wobei das Gestänge ein mittels eines Innenhochdruckumform-Verfahren geformtes Hohlelement ist. Das Gestänge weist an seinen beiden Enden eine Schwenklagerstelle, sowie Nietstellen bzw., Schraubstellen auf. Zur Realisierung von Niet.- und Schraubstellen sind bei der Herstellung des Gestänges bereits in Querrichtung des Gestänges verlaufende Öffnungen eingeformt. Des Weiteren kann im Bereich der Öffnungen in der oberen und unteren Wand eine Vertiefung eingeformt sein. In die Öffnung wird dann zur Ausbildung einer Lagerstelle ein Lagerelement eingepresst. Zweckmäßigerweise kann der Bereich der Vertiefung mit Kunststoff ausgespritzt werden.

Die DE 20 2013 003 967 U1 offenbart eine Gelenkeinrichtung zwischen ersten und zweiten Lenkern eines Gestänges eines Faltverdecks für einen Personenkraftwagen, wobei die ersten und zweiten Lenker Lagerbereiche umfassen, und die Lenker über die Lagerbereiche mittels einer Nieteinrichtung relativbeweglich zueinander in Lage gehalten werden. Die Nieteinrichtung umfasst einen Blindniet mit Niethülse und endseitig angeordnetem Setzkopf sowie einen die Niethülse durchdringenden Dornschaft mit Dornkopf. Der Lagerbereich des ersten Lenkers umfasst einen zylindrischen Lagerstutzten, der sich durch eine Lagerbohrung des zweiten Lenkers erstreckt. Die Niethülse durchdringt die Durchgangsbohrung des Lagerstutzens, und der Setzkopf wird über eine an seiner Unterseite ausgebildete Anschlagfläche durch eine an den Setzkopf angespritzte Kunststoffmasse gebildet.

### Zusammenfassung der Erfindung

Es ist eine Aufgabe der Erfindung, eine Lageranordnung zu schaffen, in der insbesondere eine Reduktion von Bauteilen und somit eine Vereinfachung bei der Herstellung einer solchen Lageranordnung erreicht werden soll.

Die Lösung der Aufgabe erfolgt durch eine Lageranordnung vorzugsweise für einen Verdeckmechanismus eines Cabriolets, umfassend zumindest ein erstes Bauteil mit einer Lageröffnung, und einem Verbindungselement, wobei das Verbindungselement über die Lageröffnung des ersten Bauteils mit diesem verbindbar ist, wobei das Verbindungselement einen metallischen Grundkörper aufweist, wobei das Verbindungselement zumindest abschnittsweise mit einem zweiten, nicht metallischen Werkstoff umspritzt ist, wobei das Verbindungselement zumindest einen ersten Schaftabschnitt und einen zweiten Schaftabschnitt aufweist, wobei der erste Schaftabschnitt und der zweite Schaftabschnitt unterschiedliche Durchmesser aufweisen, und wobei der erste und der zweite Schaftabschnitt umspritzt sind, und wobei das Verbindungselement am Ende des zweiten Schaftabschnitts einen Bereich aufweist, der aufstauchbar ist, wobei der umspritzte Werkstoff im aufstauchbaren Abschnitt des Verbindungselements in Längsrichtung mehrfach geschlitzt ist.

Die Lageranordnung ist dabei bevorzugt für einen Verdeckmechanismus in einem Cabriolet vorgesehen, wobei das erste Bauteil bevorzugt ein Lenker einer antreibbaren Verdeckkinematik ist. Das erste Bauteil kann aber auch beispielsweise ein Spriegel sein.
Als Verbindungselement wird bevorzugt ein Niet-Bolzen oder ein Blindniet verwendet, wobei das Verbindungselement durch eine im ersten Bauteil angeordnete Lageröffnung steckbar ist, wobei in einer bevorzugten erfinderischen Ausführungsform das Verbindungselement zumindest abschnittsweise mit einem zweiten, nicht metallischen, Werkstoff umspritzt ist.

Das Verbindungselement weist zumindest zwei Schaftabschnitte auf, wobei die Schaftabschnitte unterschiedliche Durchmesser aufweisen. Die Schaftabschnitte sind dabei bevorzugt zylindrisch ausgebildet.

Das Verbindungselement kann erfindungsgemäß als Niet-Bolzen ausgebildet sein. Dabei ist dem Schaftabschnitt mit dem größeren Durchmesser in einer bevorzugten Ausführungsform ein Kopf oder Bund zugeordnet. Der Schaftabschnitt mit dem kleineren Durchmesser weist in einer weiteren bevorzugten Ausführungsform eine Überlänge auf, welche zum Verbinden des Verbindungselements mit dem zumindest ersten Bauteil und dem zumindest zweiten Bauteil vorgesehen ist. Diese Überlänge kann z.B. für ein Vertaumeln des Verbindungselements erforderlich sein.

Das Befestigungselement kann in einer weiteren Ausführungsform als Blindniet ausgebildet sein. Der Blindniet besteht aus dem eigentlichen hohlen Nietkörper mit Niet-Kopf, wobei der hohle Nietkörper zwei Schaftabschnitte aufweist. Durch den hohlen Nietkörper mit Niet-Kopf wird an der dem Niet-Kopf gegenüberliegenden Seite ein längerer Dorn, der einen Dorn-Kopf aufweist, durchgesteckt, wobei der Dorn eine Sollbruchstelle aufweist. Der Dorn-Kopf wird beim Fügen mit einem Nietwerkzeug durch den hohlen Nietkörper gezogen. Dabei wird die Bohrung des hohlen Nietkörpers aufgedehnt. Wenn der Dorn-Kopf die Bohrung nicht weiter dehnen kann bzw. die Zugkraft des Nietwerkzeugs zu groß wird bricht der Dorn an der Sollbruchstelle innerhalb des hohlen Nietkörpers.

Damit sich der um spritzte Werkstoff auf dem Grundkörper des Verbindungselements nicht verdrehen kann, wird erfindungsgemäß zumindest ein Schaftabschnitt des Verbindungselements in Längsrichtung zumindest eine Vertiefung, beispielsweise in Form einer Rille, oder als Erhöhung, beispielsweise in Form einer Wulst oder Rippe, ausgebildet sein.
Unter Längsrichtung wird jene Richtung verstanden, die parallel zur Rotationsachse des Verbindungselements verläuft.

Ist das Verbindungselement als Blindniet ausgebildet, werden erfindungsgemäß beide Schaftabschnitte umspritzt. Da der Schaftabschnitt mit dem kleineren Durchmesser beim Fügen durch den Dorn-Kopf aufgeweitet wird, besteht die Gefahr, dass der umspritzte Werkstoff sich nicht entsprechend der Umformung des aufgestauchten Schaftabschnitts anpassen kann. Deshalb wird in Längsrichtung zumindest Bereichsweise die Umspritzung in Längsrichtung am Umfang geschlitzt ausgeführt, um sich beim Aufstauchen des Verbindungselements der geometrischen Form anpassen zu können. Die Schlitze können erfindungsgemäß auch in einem Winkel zur Längsrichtung ausgebildet sein.
Unter geschlitzt bzw. Schlitz wird hierbei verstanden, dass die Umspritzung bereichsweise Lücken bildet, die Freiräume in der Umspritzung schaffen.

Weiterbildungen der Erfindung sind in den abhängigen Ansprüchen, der Beschreibung sowie den beigefügten Zeichnungen angegeben.

In einer bevorzugten Ausführungsform ist das erste Bauteil über das Verbindungselement mit zumindest einem zweiten Bauteil dauerhaft verbunden. Bevorzugt ist das zweite Bauteil ebenfalls ein Teil der antreibbaren Verdeckkinematik. Das erste Bauteil ist dabei über das Verbindungselement relativ zum zweiten Bauteil bewegbar angeordnet. Das zweite Bauteil weist eine Lageröffnung auf, durch welche das Verbindungselement steckbar ist.

Das erste Bauteil und das zweite Bauteil sind bevorzugt aus einem metallischen Werkstoff hergestellt, da Metalle in der Regel höhere Kräfte aufnehmen können und das erste Bauteil und das zweite Bauteil mit geringeren Materialdicken ausgebildet werden können. Dabei können das erste Bauteil und das zweite Bauteil als Strangpressteil, bevorzugt aus Stahl oder Aluminium hergestellt sein.
Das erste Bauteil und das zweite Bauteil können auch in einem anderen Verfahren, beispielsweise dem Thixomolding hergestellt sein. Hierbei wird das Bauteil aus Magnesium in einem speziellen Verfahren hergestellt. Lenker aus Magnesium werden bevorzugt verwendet, wenn eine Reduktion des Bauteilgewichts erwünscht oder gefordert ist.

In einer weiteren erfinderischen Ausführungsform ist der Grundkörper des Verbindungselements aus Stahl hergestellt, wobei der Grundkörper des Verbindungselements als Kaltfließpressteil gefertigt ist. Das Kaltfließpressen erlaubt eine einfache und kostengünstige Herstellung von Bauteilen, wobei das Bauteil mit engen Toleranzen, schöner Oberflächengüte und erhöhter Festigkeit hergestellt werden kann
Es ist jedoch auch denkbar, dass Aluminium als Werkstoff verwendet wird. Im Prinzip sind jedoch alle Metalle, die dem Fachmann zur Herstellung von Kaltfließpressteilen bekannt sind, denkbar.

Durch das Vertaumeln des Niet-Bolzen bzw. durch das Herausziehen des Dorns beim Blindniet wird der jeweilige Schaftabschnitt aufgestaucht, wodurch eine formschlüssige, verdrehfeste, Verbindung mit dem zweiten Bauteil entsteht.
Es handelt sich hierbei nur um Ausführungsbeispiele, es versteht sich von selbst, dass jedes dem Fachmann bekannte Verfahren zur Verbindung von Befestigungselementen mit anderen Bauteilen angewendet werden kann, beispielsweise kann das Befestigungselement, im Rahmen der erfinderischen Ausführung eingepresst, verschweißt oder verschraubt sein.

Zur Umspritzung wird bevorzugt Kunststoff verwendet, da sich Kunststoff besonders zum Umspritzen von metallischen Bauteilen eignet. Bevorzugt wird als Kunststoff Polyamid (PA6, PA66), Polyoxymethylen (POM) oder Iglidur (X/Z/G) aufgrund ihrer guten Gleitlagereigenschaften verwendet.

Zur besseren Verbindung der Umspritzung mit dem Grundkörper, weist in einer erfinderischen Ausführung der Grundkörper eine Oberflächenstruktur auf, welche eine verbesserte stoffschlüssige Verbindung zwischen dem Grundkörper und der Umspritzung ermöglicht.

Um eine metallische Reibung zwischen dem ersten Bauteil und dem zweiten Bauteil zu vermeiden wird zwischen beiden Bauteilen eine nichtmetallische Scheibe angeordnet. Die Scheibe ist dabei bevorzugt aus Kunststoff hergestellt, wobei aufgrund der guten Gleitlagereigenschaften der gleiche Werkstoff wie zur Umspritzung des Grundkörpers des Verbindungselements verwendet werden kann.

Erfindungsgemäß kann das Verbindungselement in den nicht umspritzten Bereichen einen Oberflächenschutz aufweisen, der zur Verbesserung der Oberflächengüte bzw. als Korrosionsschutz vorgesehen werden kann. Beispielsweise kann der Oberflächenschutz ein leichtentfernbare, wie Fett oder Öl sein oder ein schwerentfernbarer wie Vernickeln, Verchromen oder Verzinken.

### Kurzbeschreibung der Zeichnungen

Die Erfindung wird im Folgenden beispielhaft unter Bezugnahme auf die Zeichnungen beschrieben.
- Fig. 1: ist eine perspektivische Ansicht eines erfindungsgemäßen Verbindungselements.
- Fig. 2: ist eine weitere perspektivische Ansicht gemäß Fig. 1.
- Fig. 3: Schnittdarstellung eines erfindungsgemäßen Verbindungselements gemäß Fig. 1.
- Fig. 4,5: zeigen eine perspektivische Ansicht eines verbauten Verbindungselements gemäß Fig. 1.
- Fig. 6: ist eine perspektivische Ansicht eines weiteren erfindungsgemäßen Verbindungselements.
- Fig. 7: ist eine weitere perspektivische Ansicht gemäß Fig. 6.
- Fig. 8: Schnittdarstellung eines erfindungsgemäßen Verbindungselements gemäß Fig. 6.
- Fig. 9,10: zeigen eine perspektivische Ansicht eines verbauten Verbindungselements gemäß Fig. 6.

### Detaillierte Beschreibung der Erfindung

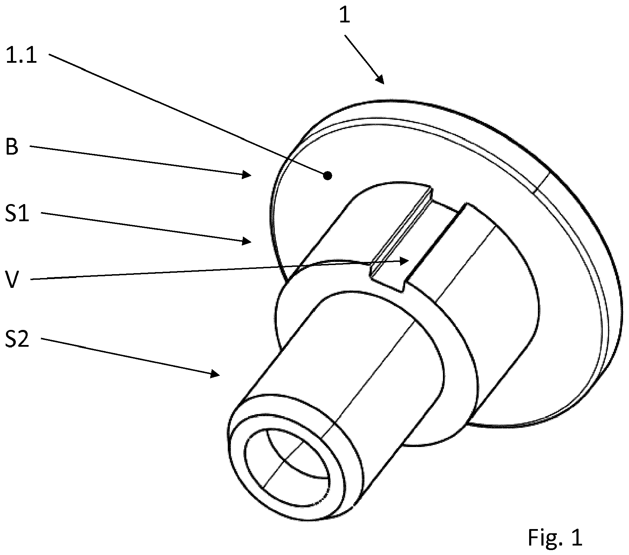

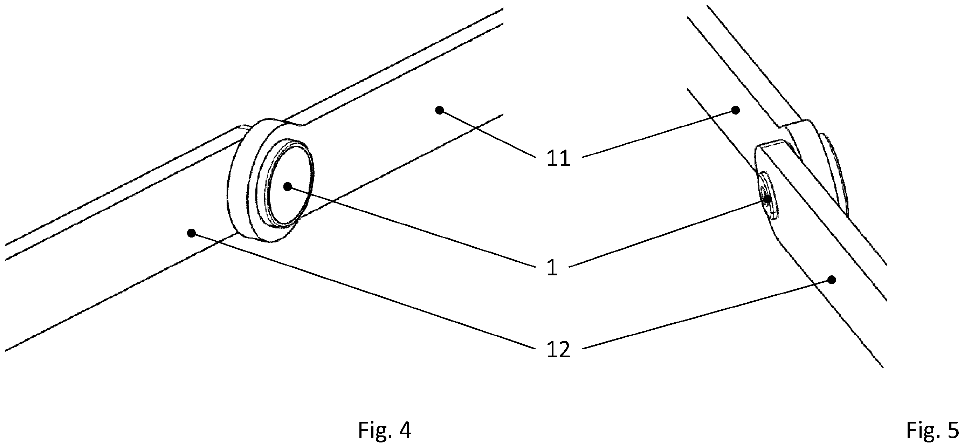

Eine perspektivische Darstellung eines Verbindungselements wird in Fig. 1, wobei das Verbindungselement als Niet-Bolzen 1 ausgeführt ist, dargestellt. Der Niet-Bolzen 1 weist einen metallischen Grundkörper 1.1 auf, der bevorzugt als Kaltfließpressteil aus Stahl hergestellt ist. Der Grundkörper 1.1 weist einen Bund B auf sowie einen ersten Schaftabschnitt S1 und einen zweiten Schaftabschnitt S2 auf. Der erste Schaftabschnitt S1 weist eine in Längsrichtung verlaufende Vertiefung auf. Diese kann alternativ auch als Erhöhung ausgebildet sein, bzw. mehrfach am Umfang des ersten Schaftabschnitts S1 angeordnet sein und dient als Verdrehsicherung V für die Umspritzung 1.2 (nicht dargestellt) am ersten Schaftabschnitt S1. Diese Ausführung wird bevorzugt dann angewendet, wenn ein erstes Bauteil 11 mit einem zweiten Bauteil 12 drehbar, wie in Fig. 4 und Fig. 5 dargestellt, verbunden werden sollen. Der zweite Schaftabschnitt S2 weist einen kleineren Durchmesser als der erste Schaftabschnitt S1 auf, wodurch das erste Bauteil 11 bzw. das zweite Bauteil 12 aufgrund der Durchmesser der entsprechenden Lageröffnungen befestigbar sind, so weist das erste Bauteil 11 einen Durchmesser in der Lageröffnung auf, welcher entsprechend dem ersten Schaftabschnitt S1 ausgebildet ist. Der zweite Schaftabschnitt S2 weist eine Überlänge auf, welche beim Verbinden des Verbindungselements 1 zur Verbindung von zumindest einem ersten Bauteil 11 mit einem zweiten Bauteil 12 zum Vertaumeln benötigt wird. Dabei weist der zweite Schaftabschnitt S2 eine Sackbohrung auf, in welche in einem späteren Fügevorgang ein Taumelwerkzeug zum Aufspreitzen des Verbindungselements 1 eingesetzt wird. Aufgrund der größeren Durchmesser des Bunds B gegenüber dem ersten Schaftabschnitt S1 bzw. dem ersten Schaftabschnitt S1 gegenüber dem zweiten Schaftabschnitt S2, ist die Position des ersten Bauteils 11 und des zweiten Bauteils 12 in Längsrichtung des Verbindungselements 1 genau definiert.

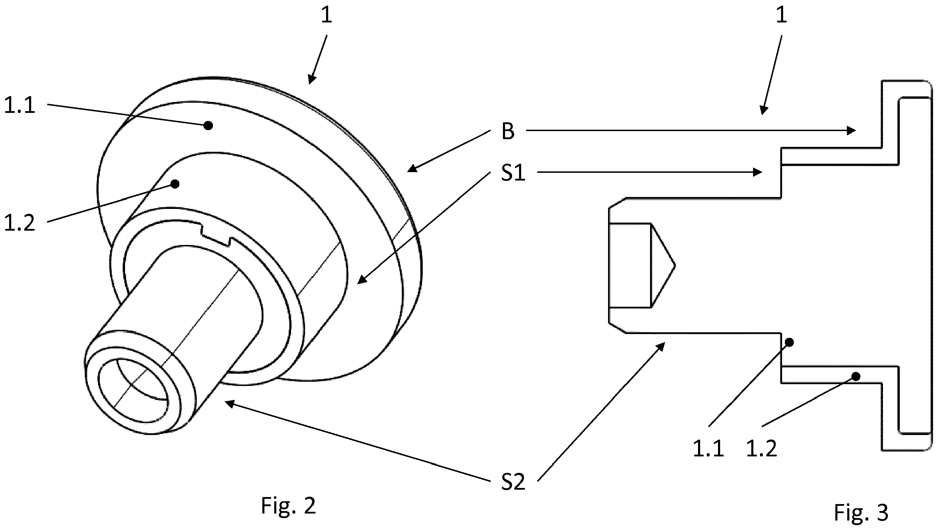

In Fig. 2 ist das erfindungsgemäße Verbindungselement 1 gemäß Fig. 1, mit der Umspritzung 1.2, dargestellt. Die Umspritzung ist bevorzugt aus einem Kunststoff ausgebildet, welcher gute Gleitlagereigenschaften, beispielsweise Polyamid, aufweist. Um eine bessere Haftung der Umspritzung 1.2 zu gewährleisten, weist der Grundkörper 1.1 des Verbindungselements 1 eine Oberflächenstruktur auf.

Fig. 3 ist eine Schnittdarstellung des Verbindungselements 1 gemäß Fig. 1, wobei der erste Schaftabschnitt S1, und der Bund B abschnittsweise, mit Kunststoff umspritzt sind. Der zweite Schaftabschnitt S2 weist eine Sackbohrung auf, in welche in einem späteren Fügevorgang ein Taumelwerkzeug zum Aufspreitzen des Verbindungselements 1 eingesetzt wird. Durch das Vertaumeln wird das Verbindungselement 1 verdrehfest mit dem zweiten Bauteil 12 dauerhaft formschlüssig verbunden. Falls erforderlich kann auch, alternativ oder zusätzlich, der zweite Schaftabschnitt S2 mit Kunststoff umspritzt sein.

Fig. 4 und Fig. 5 zeigen ein erfindungsgemäßes Verbindungselement 1 mit einem ersten Bauteil 11 und einem zweiten Bauteil 12 im verbauten Zustand. Das erste Bauteil 11 und das zweite Bauteil 12 weisen jeweils eine Lageröffnung auf, welche entsprechend dem umspritzten ersten Schaftabschnitts S1 bzw. dem zweiten Schaftabschnitt S2 ausgebildet sind. Die Materialdicke des ersten Bauteils 11 bzw. des zweiten Bauteils 12 ist der jeweiligen Schaftlänge des ersten Schaftabschnitts S1 und des zweiten Schaftabschnitts S2 entsprechend angepasst. Beim Vertaumeln entsteht ein weiterer Niet-Kopf.

Ein Niet-Bolzen als Verbindungselement 1 wird bevorzugt dann verwendet, wenn das erste Bauteil 11 und das zweite Bauteil 12 aus Stahl hergestellt sind.

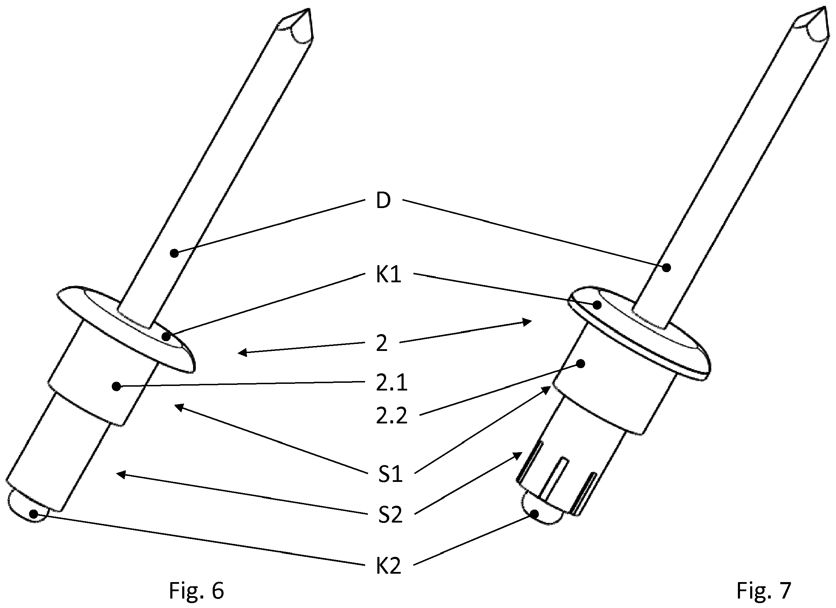

In Fig. 6 ist ein weiteres Verbindungselement in perspektivischer Ansicht dargestellt. Das Verbindungselement 2 ist hier als Blindniet ausgebildet, wobei der Blindniet aus einem Grundkörper 2, der im Wesentlichen aus dem eigentlichen hohlen Nietkörper mit Niet-Kopf besteht, wobei der hohle Nietkörper zwei Schaftabschnitte aufweist. Das Verbindungselement 2 ist ohne Umspritzung 2.2 dargestellt. Der Niet-Kopf ist dabei dem ersten Schaftabschnitt S1 zugeordnet. Der zweite Schaftabschnitt S2 weist einen kleineren Durchmesser als der erste Schaftabschnitt S1 auf. Durch den hohlen Nietkörper ist ein Dorn durchgesteckt, wobei der Dorn D einen Dorn-Kopf aufweist der dem zweiten Schaftabschnitt S2 zugeordnet ist. Das Verbindungselement 2 kann ebenfalls eine Verdrehsicherung V (nicht dargestellt) für die Umspritzung 2.2 an zumindest einem Schaftabschnitt aufweisen.

Fig. 7 ist eine weitere Darstellung des Verbindungselements 2 gemäß Fig. 6. Der Grundkörper 2.1 ist mit einer Umspritzung 2.2 aus Kunststoff versehen, wobei der erste Schaftabschnitt S1 und der zweite Schaftabschnitt S2 umspritzt sind. Die Umspritzung 2.2 am zweiten Schaftabschnitt S2 ist in Umfangsrichtung mehrfach geschlitzt, wobei die Schlitze bevorzugt in jenem Bereich des zweiten Schaftabschnitts S2 ausgebildet sind, der beim Fügen durch das Durchziehen des Dorn-Kopfes durch den Nietkörper aufgestaucht wird.

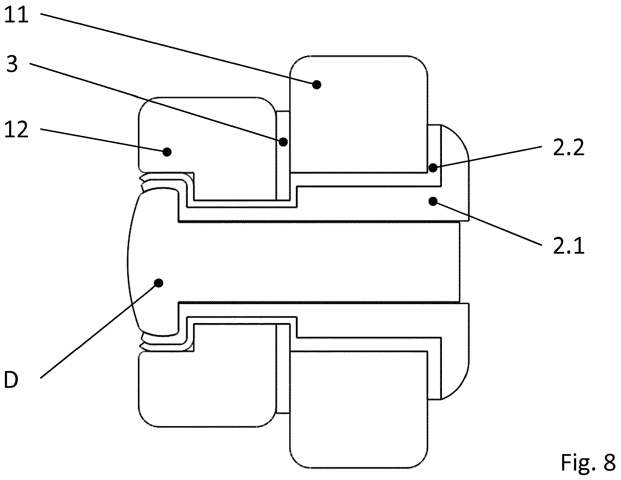

Eine Schnittdarstellung des erfindungsgemäßen Verbindungselements 2 gemäß Fig. 6 wird in Fig. 8 dargestellt. Das Verbindungselement 2 ist im verbauten Zustand dargestellt, wobei vor dem Fügevorgang zwischen dem ersten Bauteil 11 und dem zweiten Bauteil 12 eine Scheibe 3 aus Kunststoff angeordnet wird, welche einen metallischen Kontakt zwischen dem ersten Bauteil 11 und dem zweiten Bauteil 12 verhindern soll und damit auch den Reibwiderstand wenn sich das erste Bauteil 11 und das zweite Bauteil 12 relativ zueinander verdrehen. Ein Blindniet als Verbindungselement wird bevorzugt dann verwendet, wenn das erste Bauteil 11 und das zweite Bauteil 12 aus Magnesium hergestellt sind, da für das Fügen geringere Kräfte erforderlich sind. Da das Verbindungselement 2 bevorzugt aus Stahl gefertigt ist wird das Verbindungselement 2 in den Bereichen die Kontakt mit dem ersten Bauteil 11 und dem zweiten Bauteil 12 haben können umspritzt. So ist beispielsweise auch die Stirnseite des Niet-Kopfs mit Kunststoff umspritzt. Die Umspritzung 2.2 soll einen Kontakt des aus Stahl hergestellten Grundkörpers 2.1 mit dem aus Magnesium hergestellten ersten Bauteil 11 bzw. zweiten Bauteil 12 verhindern. Der Dorn D ist an einer Sollbruchstelle abgebrochen, wobei der Dorn D eine Länge aufweist die im Wesentlichen der Länge des hohlen Nietkörpers entspricht. Der Dorn-Kopf presst den aufgeweiteten Grundkörper 2.1 und den geschlitzten Bereich der Umspritzung 2.2 gegen die Lageröffnung des zweiten Bauteils 12 wodurch das Verbindungselement 2 verdrehfest und formschlüssig mit dem zweiten Bauteil 2 verbunden ist.

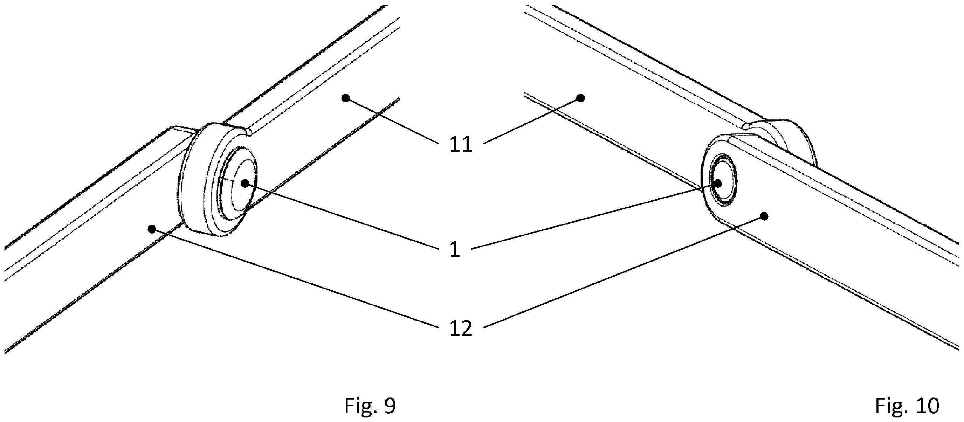

In Fig. 10 und in Fig. 11 ist das erfindungsgemäße Verbindungselement 2 mit dem ersten Bauteil 11 und dem zweiten Bauteil 12 dauerhaft verbunden. Da der Dorn D eine Sollbruchstelle aufweist, die im Inneren des hohlen Nietkörpers angeordnet ist, schließt das Verbindungselement 2 im Wesentlichen bündig mit dem zweiten Bauteil 12 ab.

### Bezugszeichenliste

- 1: Verbindungselement
- 1.1: Grundkörper
- 1.2: Umspritzung
- 2: Verbindungselement
- 2.1: Grundkörper
- 2.2: Umspritzung
- 3: Scheibe
- 11: erstes Bauteil
- 12: zweites Bauteil

- B: Bund
- D: Dorn
- K1: Niet-Kopf
- K2: Dorn-Kopf
- S1: erster Schaftabschnitt
- S2: zweiter Schaftabschnitt
- V: Verdrehsicherung

## Patentansprüche

1. Lageranordnung vorzugsweise für einen Verdeckmechanismus eines Cabriolets, umfassend zumindest ein erstes Bauteil (11) mit einer Lageröffnung, und einem Verbindungselement (1, 2), wobei das Verbindungselement (1, 2) über die Lageröffnung des ersten Bauteils (11) mit diesem verbindbar ist, wobei das Verbindungselement (1, 2) einen metallischen Grundkörper (1.1, 2.1) aufweist, und wobei das Verbindungselement (1, 2) zumindest abschnittsweise mit einem zweiten, nicht metallischen Werkstoff umspritzt ist, **dadurch gekennzeichnet, dass** das Verbindungselement (1, 2) zumindest einen ersten Schaftabschnitt (S1) und einen zweiten Schaftabschnitt (S2) aufweist, wobei der erste Schaftabschnitt (S1) und der zweite Schaftabschnitt (S2) unterschiedliche Durchmesser aufweisen, und wobei der erste und der zweite Schaftabschnitt (S1, S2) umspritzt sind, und wobei das Verbindungselement (1, 2) am Ende des zweiten Schaftabschnitts (S2) einen Bereich aufweist, der aufstauchbar ist, wobei der umspritzte Werkstoff im aufstauchbaren Abschnitt des Verbindungselements (1, 2) in Längsrichtung mehrfach geschlitzt ist.

2. Lageranordnung nach Anspruch 1, **dadurch gekennzeichnet, dass** das erste Bauteil (11) über das Verbindungselement (1, 2) mit zumindest einem zweiten Bauteil (12) dauerhaft verbunden ist, und wobei das erste Bauteil (11) relativ zu dem zweiten Bauteil (12) bewegbar ist, wobei das zweite Bauteil (12) eine Lageröffnung aufweist.

3. Lageranordnung nach zumindest einem der vorhergehenden Ansprüche, **dadurch gekennzeichnet, dass** das erste Bauteil (11) und das zweite Bauteil (12) aus einem metallischen Werkstoff hergestellt sind.

4. Lageranordnung nach zumindest einem der vorhergehenden Ansprüche, **dadurch gekennzeichnet, dass** der Grundkörper (1.1, 2.1) des Verbindungselements (1, 2) aus Stahl ist.

5. Lageranordnung nach zumindest einem der vorhergehenden Ansprüche, **dadurch gekennzeichnet, dass** der Grundkörper (1.1, 2.1) des Verbindungselements (1, 2) ein Kaltfließpressteil ist.

6. Lageranordnung nach zumindest einem der vorhergehenden Ansprüche, **dadurch gekennzeichnet, dass** der aufgestauchte Bereich des Verbindungselements (1, 2) mit dem am Ende des Verbindungselements (1, 2) angeordneten Bauteil verdrehfest verbunden ist.

7. Lageranordnung nach zumindest einem der vorhergehenden Ansprüche, **dadurch gekennzeichnet, dass** an zumindest einem ersten Schaftabschnitt (S1) und oder an einem zweiten Schaftabschnitt (S2) in Längsrichtung zumindest eine Vertiefung und/oder Erhöhung ausgebildet ist.

8. Lageranordnung nach zumindest einem der vorhergehenden Ansprüche, **dadurch gekennzeichnet, dass** der umspritzende Werkstoff Kunststoff ist.

9. Lageranordnung nach zumindest einem der vorhergehenden Ansprüche, **dadurch gekennzeichnet, dass** der Grundkörper (1.1, 2.1) im Bereich der Umspritzung (1.2, 2.2) eine Oberflächenstruktur aufweist, welche eine verbesserte stoffschlüssige Verbindung zwischen dem Grundkörper (1.1, 2.1) und der Umspritzung (1.2, 2.2) ermöglicht.

10. Lageranordnung nach zumindest einem der vorhergehenden Ansprüche, **dadurch gekennzeichnet, dass** zwischen dem ersten Bauteil (11) und dem zweiten Bauteil (12) eine nichtmetallische Scheibe (3) angeordnet ist.

11. Lageranordnung nach zumindest einem der vorhergehenden Ansprüche, **dadurch gekennzeichnet , dass** die Scheibe (3) aus Kunststoff hergestellt ist.

12. Lageranordnung nach zumindest einem der vorhergehenden Ansprüche, **dadurch gekennzeichnet, dass** der Grundkörper (1.1, 2.1) des Verbindungselements im nicht umspritzten Bereich zumindest teilweise einen Oberflächenschutz aufweist.

## Claims

1. Bearing assembly preferably for a folding top mechanism of a cabriolet, comprising at least one first component (11) with a bearing opening, and a connecting element (1, 2), it being possible for the connecting element (1, 2) to be connected to the first component (11) via the bearing opening of the latter, the connecting element (1, 2) having a metallic main body (1.1, 2.1), and the connecting element (1, 2) being overmoulded at least in sections with a second, non-metallic material, **characterized in that** the connecting element (1, 2) has at least one first shank section (S1) and one second shank section (S2), the first shank section (S1) and the second shank section (S2) having different diameters, and the first and the second shank section (S1, S2) being overmoulded, and, at the end of the second shank section (S2), the connecting element (1, 2) having a region which can be upset, the overmoulded material being slotted multiple times in the longitudinal direction **in that** section of the connecting element (1, 2) which can be upset.

2. Bearing assembly according to Claim 1, **characterized in that** the first component (11) is connected permanently to at least one second component (12) via the connecting element (1, 2), and it being possible for the first component (11) to be moved relative to the second component (12), the second component (12) having a bearing opening.

3. Bearing assembly according to at least one of the preceding claims, **characterized in that** the first component (11) and the second component (12) are manufactured from a metallic material.

4. Bearing assembly according to at least one of the preceding claims, **characterized in that** the main body (1.1, 2.1) of the connecting element (1, 2) is made from steel.

5. Bearing assembly according to at least one of the preceding claims, **characterized in that** the main body (1.1, 2.1) of the connecting element (1, 2) is a cold extruded part.

6. Bearing assembly according to at least one of the preceding claims, **characterized in that** the upset region of the connecting element (1, 2) is connected fixedly to the component, which is arranged at the end of the connecting element (1, 2), so as to rotate with it.

7. Bearing assembly according to at least one of the preceding claims, **characterized in that** at least one depression and/or elevation are/is configured in the longitudinal direction on at least one first shank section (S1) and/or on one second shank section (S2).

8. Bearing assembly according to at least one of the preceding claims, **characterized in that** the overmoulding material is plastic.

9. Bearing assembly according to at least one of the preceding claims, **characterized in that**, in the region of the overmould (1.2, 2.2), the main body (1.1, 2.1) has a surface structure which makes an improved integrally joined connection between the main body (1.1, 2.1) and the overmould (1.2, 2.2) possible.

10. Bearing assembly according to at least one of the preceding claims, **characterized in that** a non-metallic disc (3) is arranged between the first component (11) and the second component (12).

11. Bearing assembly according to at least one of the preceding claims, **characterized in that** the disc (3) is manufactured from plastic.

12. Bearing assembly according to at least one of the preceding claims, **characterized in that** the main body (1.1, 2.1) of the connecting element has a surface protection means at least partially in the non-overmoulded region.

## Revendications

1. Système de palier, de préférence pour un mécanisme de capote d'un cabriolet, comprenant au moins un premier composant (11) avec une ouverture de palier, et un élément de connexion (1, 2), l'élément de connexion (1, 2) pouvant être connecté au premier composant (11) par le biais de l'ouverture de palier du premier composant, l'élément de connexion (1, 2) présentant un corps de base métallique (1.1, 2.1), et l'élément de connexion (1, 2) étant au moins en partie surmoulé avec un deuxième matériau non métallique,
**caractérisé en ce que** l'élément de connexion (1, 2) présente au moins une première portion d'arbre (S1) et une deuxième portion d'arbre (S2), la première portion d'arbre (S1) et la deuxième portion d'arbre (S2) présentant des diamètres différents, et la première et la deuxième portion d'arbre (S1, S2) étant surmoulées, et l'élément de connexion (1, 2) présentant, à l'extrémité de la deuxième portion d'arbre (S2), une région qui peut être refoulée, le matériau surmoulé dans la portion pouvant être refoulée de l'élément de connexion (1, 2) étant fendu plusieurs fois dans la direction longitudinale.

2. Système de palier selon la revendication 1, **caractérisé en ce que** le premier composant (11) est connecté de manière permanente à au moins un deuxième composant (12) par le biais de l'élément de connexion (1, 2), et le premier composant (1) pouvant être déplacé par rapport au deuxième composant (12), le deuxième composant (12) présentant une ouverture de palier.

3. Système de palier selon au moins l'une quelconque des revendications précédentes, **caractérisé en ce que** le premier composant (11) et le deuxième composant (12) sont fabriqués à partir d'un matériau métallique.

4. Système de palier selon au moins l'une quelconque des revendications précédentes, **caractérisé en ce que** le corps de base (1.1, 2.1) de l'élément de connexion (1, 2) est en acier.

5. Système de palier selon au moins l'une quelconque des revendications précédentes, **caractérisé en ce que** le corps de base (1.1, 2.1) de l'élément de connexion (1, 2) est une pièce extrudée à froid.

6. Système de palier selon au moins l'une quelconque des revendications précédentes, **caractérisé en ce que** la région refoulée de l'élément de connexion (1, 2) est connectée de manière solidaire en rotation au composant disposé à l'extrémité de l'élément de connexion (1, 2).

7. Système de palier selon au moins l'une quelconque des revendications précédentes, **caractérisé en ce qu'**au moins un renfoncement et/ou un rehaussement est réalisé au niveau d'au moins une première portion d'arbre (S1) et/ou au niveau d'une deuxième portion d'arbre (S2) dans la direction longitudinale.

8. Système de palier selon au moins l'une quelconque des revendications précédentes, **caractérisé en ce que** le matériau de surmoulage est du plastique.

9. Système de palier selon au moins l'une quelconque des revendications précédentes, **caractérisé en ce que** le corps de base (1.1, 2.1) présente dans la région du surmoulage (1.2, 2.2) une structure de surface qui permet une connexion par liaison de matière améliorée entre le corps de base (1.1, 2.1) et le surmoulage (1.2, 2.2).

10. Système de palier selon au moins l'une quelconque des revendications précédentes, **caractérisé en ce qu'**entre le premier composant (11) et le deuxième composant (12) est disposé un disque non métallique (3).

11. Système de palier selon au moins l'une quelconque des revendications précédentes, **caractérisé en ce que** le disque (3) est fabriqué en plastique.

12. Système de palier selon au moins l'une quelconque des revendications précédentes, **caractérisé en ce que** le corps de base (1.1, 2.1) de l'élément de connexion présente au moins en partie une protection de surface dans la région non surmoulée.
